Europäisches Patentamt

European Patent Office

Office européen des brevets

(19)

(11) Numéro de publication: **0 109 881**
**B1**

(12) # FASCICULE DE BREVET EUROPEEN

(45) Date de publication du fascicule du brevet:
11.06.86

(51) Int. Cl.⁴: **H 02 B 1/04**

(21) Numéro de dépôt: 83402127.1

(22) Date de dépôt: 02.11.83

(54) **Rail profile de fixation d'appareillage pour coffet ou tableau électrique de distribution à basse tension.**

(30) Priorité: 08.11.82 FR 8218839

(43) Date de publication de la demande:
30.05.84 Bulletin 84/22

(45) Mention de la délivrance du brevet:
11.06.86 Bulletin 86/24

(84) Etats contractants désignés:
BE CH DE FR GB IT LI NL SE

(56) Documents cités:
CH - A - 489 179
FR - A - 2 438 359

(73) Titulaire: MERLIN GERIN, Rue Henri Tarze,
F-38050 Grenoble Cedex (FR)

(72) Inventeur: Buet, Jacques, Merlin Gerin,
F-38050 Grenoble Cedex (FR)
Inventeur: Rebesco, Joseph, Merlin Gerin,
F-38050 Grenoble Cedex (FR)
Inventeur: Velletaz, Gilbert, Merlin Gerin,
F-38050 Grenoble Cedex (FR)

(74) Mandataire: Kern, Paul et al, Merlin Gerin Sce.
Brevets 20, rue Henri Tarze, F-38050 Grenoble Cedex
(FR)

## Description

L'invention est relative à un coffret ou tableau électrique de distribution à basse tension décrit dans le préambule de la revendication 1.

Le montage des coffrets connus est facilité par la fixation de l'appareillage par encliquetage, mais le raccordement électrique des appareillages est long et compliqué malgré la commercialisation d'auxiliaires, notamment de peignes de raccordement ou de jeux de barres.

La présente invention a pour but de remédier à ces inconvénients et de permettre la réalisation d'un ensemble fonctionnel compact de montage aise. Ce but est atteint par les dispositions mentionnées dans la partie caractéristique de la revendication 1.

Sur la partie avant du rail sont encliquetés les appareils, notamment les disjoncteurs modulaires, tandis que sur la partie arrière en regard du fond du coffret sont encliquetés des supports d'auxiliaires. Toute la partie avant du rail est ainsi disponible pour les appareils, qui sont accolés les uns aux autres, les auxiliaires associes à ces appareils étant fixés au rail aux emplacements appropriés pour former un sous-ensemble compact.

Le document CH-A-489.179 décrit un rail pour un encliquetage sur les deux faces d'appareils électriques, ce rail étant renforcé par des nervures ou surépaisseurs pour résister à la charge accrue. Aucun accessoire notamment de raccordement n'est prévu.

Un coffret connu (FR-A-2.438.359) comprend un ensemble appareillage, jeu dc barres d'alimentation fixe à un rail profilé par encliquetage. Les supports du jeu de barres sont fixés du même côté que les appareils en étant intercalés entre ces derniers. Il en résulte une perte de place et une rupture de l'esthétique. La filerie de départ doit être mise en place par l'installateur.

Selon un développement de l'invention, le rail profilé comporte en plus des profils symétriques d'encliquetage à l'avant et à l'arrière, des saillies internes voisines de l'âme du rail qui confinent avec ce dernier des logements de pièces de fixation, notamment d'écrous. Le rail peut présenter différentes configurations, deux exemples de réalisation étant décrits en détail par la suite.

Un élément important de l'invention est constitué par les bracelets de support des fils de connexion à l'appareillage modulaire. Ces bracelets sont fixés à la face postérieure du rail profilé et échelonnés le long de ce rail pour former un chemin parallèle aux bornes des appareils auxquelles se raccordent les fils supportés par les bracelets. Un peigne de guidage des fils sortant de ce chemin peut être clipsé sur un bord du bracelet ainsi qu'un cache s'étendant jusqu'à l'appareillage de façon à coiffer toute la filerie.

La majorité des auxiliaires de montage peuvent être adaptes à la face postérieure du rail avant son incorporation à l'intérieur du coffret. Il est particulièrement intéressant de disposer parallèlement au rail profilé, un bornier multipolaire pour l'alimentation de l'appareillage modulaire encliqueté sur la face de fixation antérieure. Le bornier est solidarise au rail par plusieurs pieds de support encliquetables sur la face de fixation postérieure. Le bornier multipolaire est formé par la superposition d'une pluralité de barres conductrices décalées verticalement, chaque barre associée à la phase correspondante, étant équipée d'une pluralité de bornes ou de connecteurs échelonnes à intervalles réguliers sur toute la longueur de la barre, le raccordement de l'appareillage modulaire au bornier s'effectuant à partir de la face avant du coffret au moyen de conducteurs de liaison. Ce type de bornier est particulièrement adapté à des rangées non homogènes d'appareillage modulaire comportant des boîtiers de differentes dimensions.

D'autres avantages et caractéristiques ressortiront plus clairement de l'exposé qui va suivre de différents modes de mise en ouvre de l'invention donnés à titre d'exemples non limitatifs et représentés aux dessins annexés dans lesquels:

la figure 1 est une vue schématique en perspective de l'interieur d'un coffret électrique selon l'invention;

les figures 1a et 1b montrent en coupe transversale deux modes de réalisation du rail profilé selon la fig. 1;

les figures 2 et 4 sont des vues de côté respectivement avant et après assemblage de l'ensemble, rail appareillage, jeu de barre et bracelet selon la fig. 1, la fig. 3 étant la vue de face correspondante;

la figure 5 est une vue analogue à la fig. 2 d'une variante de réalisation,;

la figure 6 est une vue analogue à celle de la fig. 4 d'une autre variante de réalisation;

les figures 7, 8 et 9 sont respectivement des vues en perspective et de côté de bornes de départ;

les figures 10, 11 et 12 illustrent en perspective et en plan le montage des pattes de fixation du rail;,

les figures 13 à 18 montrent le montage d'une barrette auxiliaire de raccordement et de son capot de protection;

les figures 19 et 20 sont des vues en perspective du bracelet selon la fig. 6, équipé d'un peigne et d'un cache.

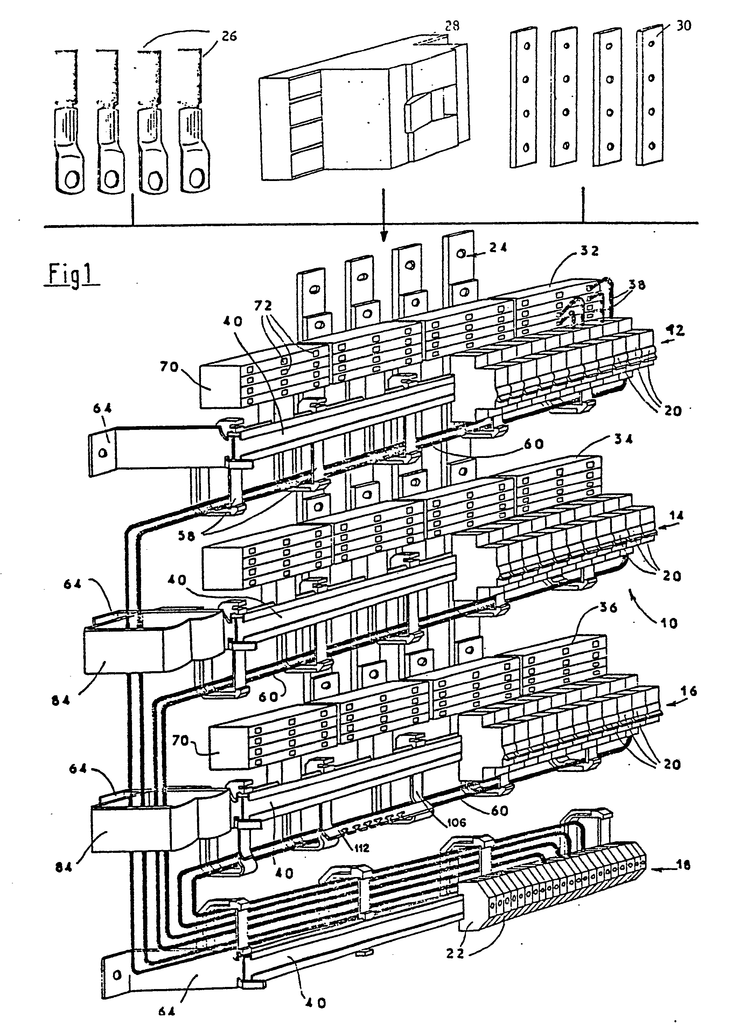

Sur les figures, est représenté l'intérieur d'un coffret 10 de distribution électrique à basse tension après enlèvement de l'enveloppe et du châsis de fixation. Selon la figure 1, le coffret 10 est équipé d'une pluralité de rangées 12, 14, 16, 18... d'appareillage électrique, s'étendant parallèlement dans la direction transversale du coffret et disposées verticalement à des niveaux prédéterminés. Les trois rangées 12, 14, 16 des niveaux supérieurs comportent chacune de l'appareillage modulaire 20 à boîtiers moulés, notamment des disjoncteurs, interrupteurs, coupe-circuit à fusibles, contacteurs, etc. La rangée 18 du niveau inférieur est dotée de bornes de départ 22 en liaison électrique avec l'ensemble des sorties de l'appareillage modulaire 20 des rangées 12 à 16.

L'alimentation de l'appareillage 20 des trois rangées 12, 14, 16 s'opère au moyen d'un jeu de barres 24 tétrapolaire de distribution s'étendant verticalement dans la partie centrale du coffret et dans l'intervalle postérieur ménagé entre les rangées 12 à 16 et le fond du coffret. L'entrée du jeu de barres 24 vertical est raccordée électriquement soit à des cosses d'arrivée 26, soit à un disjoncteur 28 de tête, soit à un jeu de barres 30 d'arrivée d'un réseau tétrapolaire. Au jeu de barres 24 principal de distribution est associé au niveau de chaque rangée 12, 14, 16, un bornier d'alimentation 32, 34, 36 branche aux entrées correspondantes de l'appareillage modulaire 20 par des conducteurs de liaison 38.

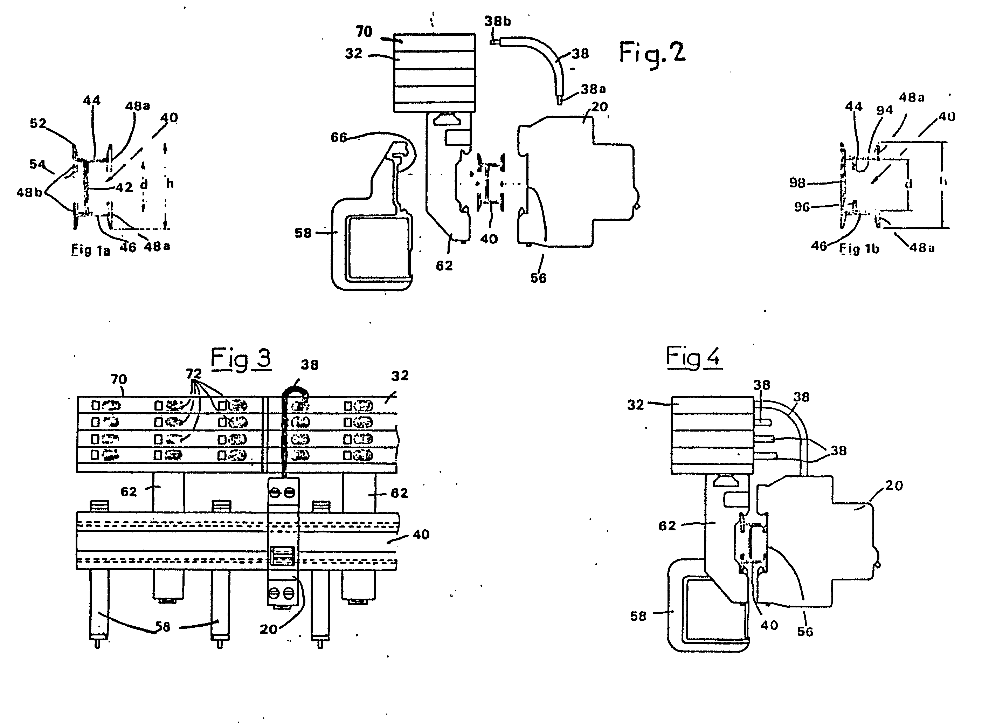

L'appareillage modulaire 20 et le bornier d'alimentation 32, 34, 36 de chaque rangée 12, 14, 16 sont solidarisés à un rail de support 40 formé par un profilé métallique, notamment en aluminium, présentant un double profil symétrique en Oméga avant et arrière. Le rail 40 (fig. la) comporte une âme 42 commune s'étendant parallèlement à la face avant et au fond du coffret, et une paire d'ailes 44, 46 de mêmes longueurs et perpendiculaires à l'âme 42. Un intervalle vertical d sépare les deux ailes 44, 46. Les deux extrémités opposées de chaque aile 44, 46 sont dotées chacune d'un rebord 48a, 48b présentant une saillie externe 52 alignée avec une saillie interne 54. Les rebords 48a situés d'un même côté de l'âme 42 commune et appartenant aux deux ailes 44, 46 sont disposés dans un même plan vertical parallèle à l'âme 42 du profilé. Il en est de même des deux autres rebords 48b coplanaires agencés parallèlement à gauche de l'âme 42. Les deux ailes 44, 46 parallèles associées respectivement à la paire de rebords 48a, 48b conjugués forment deux sections en I réunies entre elles par l'âme 42 perpendiculaire aux ailes 44, 46. L'écartement h entre les saillies externes 52 des rebords antérieurs 48a et postérieurs 48b est identique et correspond à 35 mm. La face avant du rail 40 profilé comporte un premier profil symétrique en Oméga constitué par les saillies 52 externes des rebords antérieurs 48a et une partie des ailes 44, 46 s'étendant jusqu'à l'âme 42 du rail support. Ce premier profil à saillies 52 externes sert au montage à encliquetage de l'appareillage 20 modulaire comprenant chacun un boîtier à socle de fixation 56 équipé d'un verrou d'encliquetage (fig. 2 à 4). Un deuxième profil symétrique en forme de C est matérialisé sur la face avant par les saillies 54 internes des rebords 48a. Une patte de fixation spéciale à écrou (non représentée) peut être insérée dans ce deuxième profil à saillies internes pour la fixation de n'importe quel type d'appareillage 20 non modulaire.

La face arrière du rail 40 profilé est équipée d'une manière similaire d'un premier profil en Oméga à saillies 52 externes, et d'un deuxième profil en C a saillies 54 internes, lesdites saillies 52, 54 appartenant aux deux rebords 48b postérieurs coplanaires. Cette face arrière est utilisée pour l'encliquetage d'accessoires de fixation, notamment des bracelets 58 de logement de la filerie 60 horizontale agencée entre deux rangées successives, des pieds 62 de support du bornier 32, 34, 36 de la rangée 12, 14, 16 correspondante, des pattes 64 de fixation du rail 40 profilé au châssis ou au fond du coffret, etc... Tout autre appareillage ou organe auxiliaire peut être adapté à la face arrière du rail 40.

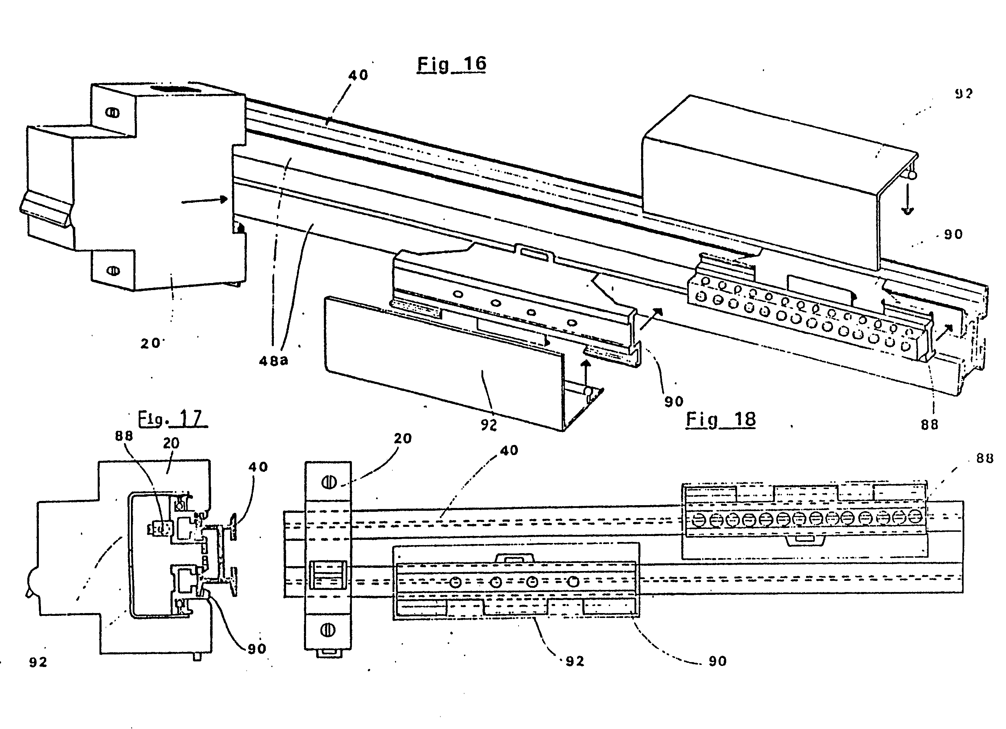

Les figures 2 à 18 montrent des vues partielles de la fig. 1 de différentes utilisations du rail support 40. Selon les figures 2 à 4, concernant le rail 40 profilé de la rangée supérieure 12, le socle 56 de fixation d'un appareillage 20 modulaire est susceptible d'être encliqueté sur les saillies 52 du premier profil de la face avant du rail 40. Ce montage à encliquetage autorise l'assemblage transversal côté à côte d'une pluralité d'appareillage 20 sur toute la longueur de la face avant du rail 40. Les bracelets 58 de logement de la filerie 60 horizontale, et les pieds 62 de support du bornier 32 sont équipés chacun d'une semelle 66, de fixation encliquetable sur les saillies 52 externes des rebords 48b de la face arrière du rail 40. La semelle 66 de chaque bracelet 58 comporte une patte extérieure déformable par élasticité, et la semelle 68 du pied 62 rigide est dotée d'un verrou d'encliquetage. En position encliquetée, le bornier 32 et les bracelets 58 se trouvent respectivement au-dessus et en-dessous du rail 40 tandis que l'appareillage 20 est au niveau du rail 40. La filerie 60 horizontale raccordée aux bornes de sortie de l'appareillage 20 est positionnée dans les bracelets 58, ces derniers étant imbriqués avec les pieds 62 avec un décalage prédéterminé le long de la face arrière du rail 40. Le raccordement du bornier 32 d'alimentation de l'appareillage 20 est realisé au moyen des conducteurs 38 de liaison dont le câblage s'effectue à partir de la fàce avant du coffret.

Chaque bornier 32, 34, 36 (fig. 1 à 4) des rangées correspondantes 12 à 16 est formé par la superposition de quatre barres horizontales et parallèles constituant un jeu de barres élémentaire de dérivation allmenté par le jeu de barres principal 24 de distribution. Chaque jeu de barres tétrapolaire de dérivation est orthogonal au jeu de barres 24 vertical, et est loge dans un boîtier 70 isolant agencé pour maintenir l'écartement correct entre les barres des différentes phases. Chaque barre du bornier 32, 34, 36 comporte une pluralité de bornes de raccordement ou de connecteurs (non représentés) échelonnés à intervalles réguliers sur toute la longueur de la barre, chaque borne ou connecteur étant accessible au moyen d'une ouverture 72 prévue dans la face avant du boîtier 70. L'une 38a des extrémités du conducteur 38 souple de liaison est insérée dans la borne d'entrée de l'appareillage 20, et l'autre extrémité 38b est introduite dans une ouverture 72 correspondante du boîtier 70, située au-dessus de l'appareillage 20. Les bornes de raccordement assujetties aux barres du bornier 32, 34, 36 sont d'un type quelconque, notamment à cage avec ou sans vis de serrage, à enfichage, etc... La présence du bornier 32, 34, 36, associe à un jeu de barres de dérivation au niveau de chaque rangée 12, 14, 16, facilite le câblage de l'appareillage 20 modulaire correspondant et autorise des rangées non homogènes constituées par tout type d'appareillage 20 indépendamment de l'encombrement du boîtier isolant modulaire.

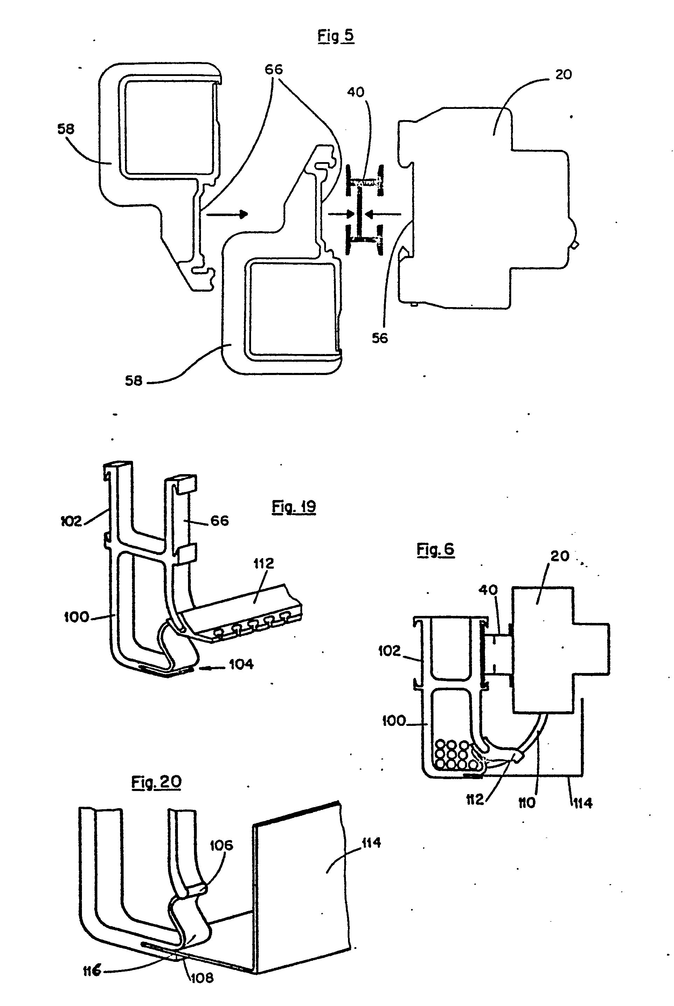

En référence a la figure 5, le bornier 32, 34, 36 est supprimé, et la face arrière du rail 40 profilé reçoit les semelles 66 de fixation encliquetables de deux séries de bracelets 58 identiques. L'une des series est dirigée vers le bas pour constituer une goulotte inférieure de la filerie 60 horizontale raccordée aux bornes de sorties de l'appareillage 20 modulaire. L'autre série est orientée vers le haut pour former une goulotte supérieure de la filerie 60 horizontale susceptible d'être connectée aux bornes d'entrée de l'appareillage 20.

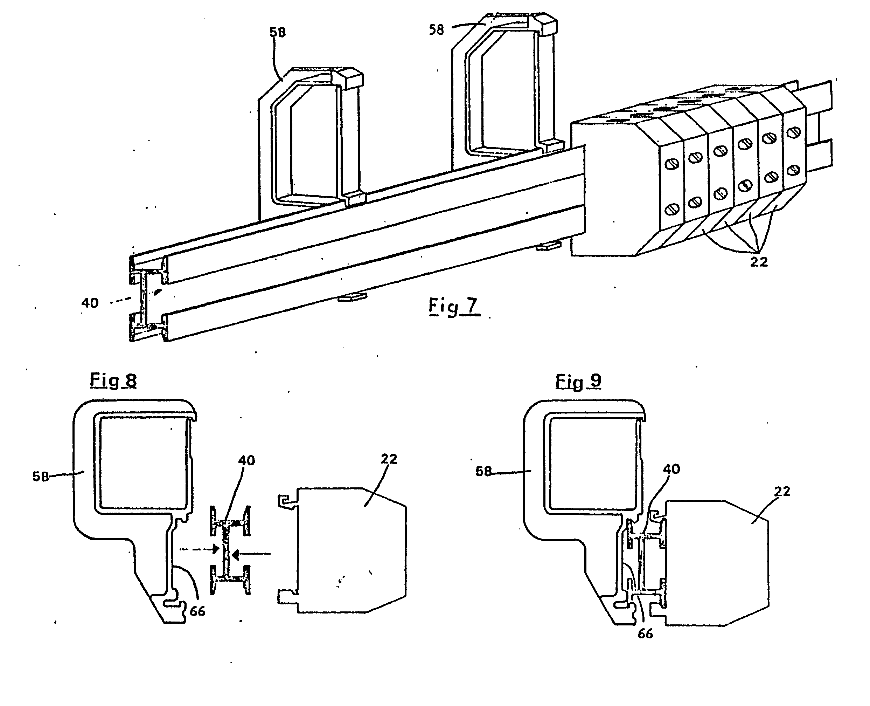

Sur les figures 7 à 9, le rail support 40 de la rangée inférieure 18 (fig. 1) est identique à celui des rangées 12 a 16 et reçoit sur sa face avant une série de bornes de départ 22 accolées transversalement. Chaque borne 22 est logée dans une enveloppe en matériau isolant moulé, pourvue d'un socle encliquetable sur les saillies externes des rebords antérieurs 48a du rail 40. Des bracelets 58 sont solidarisés par encliquetage à la face arrière du rail 40 pour constituer une goulotte horizontale située au-dessus des bornes 22 de départ. La goulotte est traversée par la filerie 60 horizontale raccordée électriquement d'une part aux bornes de sortie de l'appareillage 20 modulaire des trois rangées 12, 14, 16 supérieures et d'autre part aux bornes de départ 22 de la rangée 18.

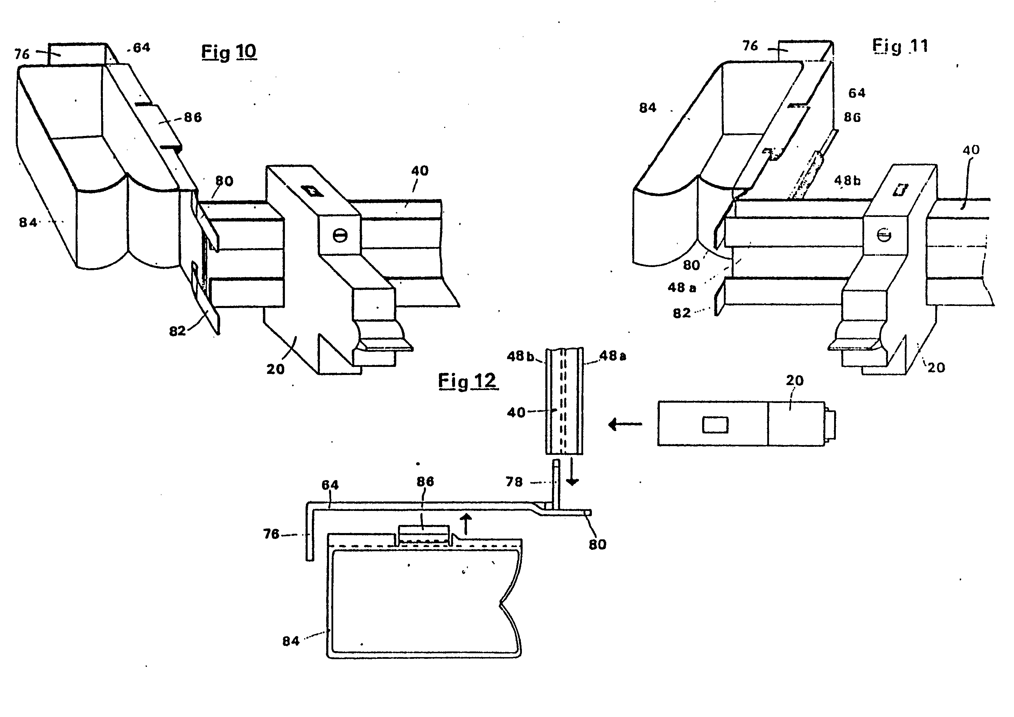

En référence aux figures 10 à 12, une patte 64 de fixation est agencée à chaque extrémite du rail profilé 40 et est équipée d'une équerre 76 assujettie par vissage au châssis du coffret, et d'un tenon 78 de maintien du rail. Le tenon 78 est introduit de chant selon la direction longitudinale du rail 40 dans le deuxième profil en C appartenant à la face arrière du rail 40. A la patte 40 est associée une paire d'extensions 80, 82 perpendiculaires au tenon 78 et formant des butées de blocage lateral aux extrémités du rail support 40. Un bracelet 84 de support de la filerie 60 verticale comporte des moyens d'accrochage 86 susceptibles d'être encliquetés sur la patte 64 latérale de fixation du rail 40 des rangées intermédiaires 14, 16. Selon une variante (non représentée), le bracelet 84 pourrait être également solidarisé au montant vertical du tableau.

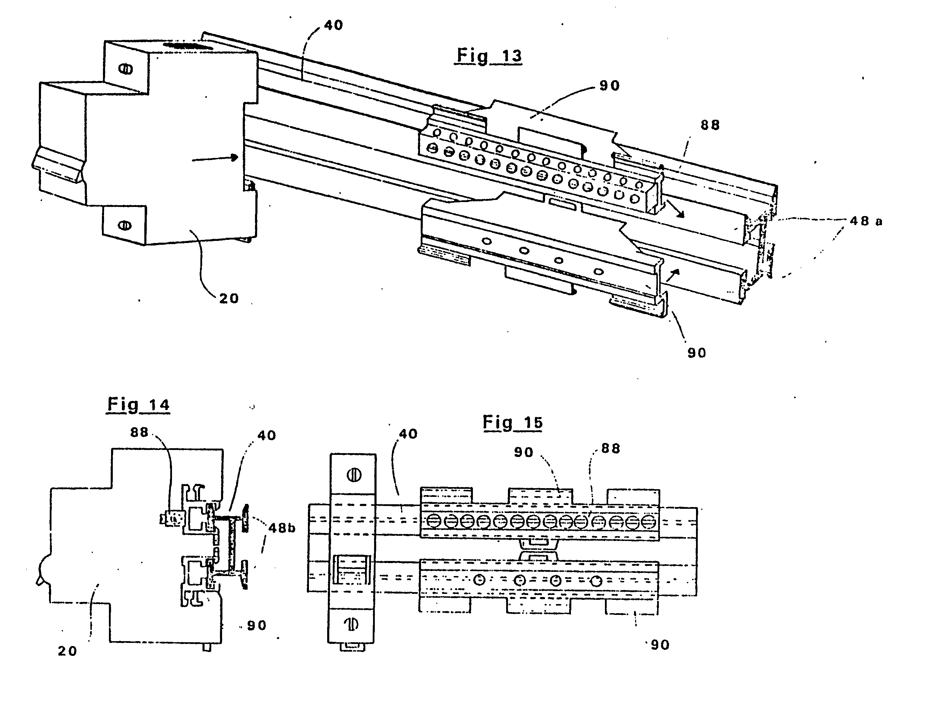

Sur les figures 13 à 18, une barrette 88 de raccordement peut être solidarisée à la face avant du rail 40 profilé par encliquetage de son support 90 isolant sur le rebord 48a inférieur ou supérieur. Un capot 92 isolant en forme d'équerre est rapporte par clipsage sur le support 90 de la barrette 88 en jouant le rôle de cache-bornes.

Selon une variante (fig. 1b), le rail support 40 presente un profil légèrement différent de celui de la fig. 1a. La face avant présente en saillie externe les rebords antérieurs 48a solidaire des deux ailes 44, 46. L'âme 42 est remplacée par deux saillies 94, 96 internes perpendiculaires aux ailes 44, 46. Les rebords postérieurs 48b de la face arrière sont prolonges l'un vers l'autre par une paroi 98 commune qui forme un profil symétrique à saillies externes. La hauteur de la paroi 98 correspond à l'écartement h ménagé entre les saillies externes des rebords 48a de la face avant. La dimension de h est égale à 35 mm.

Une variante de realisation du bracelet est illustrée aux figures 6, 19 et 20. Le bracelet 100 présente en plus de la semelle d'encliquetage 66 une semelle d'encliquetage 102, les deux semelles étant disposées dos à dos. Cette disposition permet un montage inversé du bracelet ou éventuellement une fixation sur la face avant du rail profilé 40. L'anneau 100 formant la goulotte comporte une ouverture 104 d'introduction des fils, délimitée par des bords 106 et 108 et obturée par une languette élastique 116. Les bords 106 sont agencés pour recevoir par encliquetage un peigne 112 supporté par au moins deux bracelets successifs. Entre les dents du peigne 112 sont insérés les fils 110 sortant de la goulotte vers l'appareil 20.

D'une manière analogue un cache 114 peut être encliquete sur les bords 108 de deux bracelets successifs, le cache 114 s'étendant jusqu'aux bornes de l'appareil 20 en cachant l'ensemble de la filerie.

**Revendications**

1. Coffret ou tableau électrique de distribution à basse tension raccordé à un réseau multipolaire et renfermant de l'appareillage modulaire (20) fixé sur au moins un rail (40) support formé par un profilé métallique solidaire du châssis ou du fond du coffret, ledit rail s'étendant selon la direction transversale du coffret et présentant d'une part une face de fixation antérieure située en regard de la face avant du coffret et agencée pour l'encliquetage des socles de l'appareillage modulaire (20), et d'autre part une face de fixation postérieure, caractérisé en ce que les auxiliaires dudit appareillage telsque des borniers d'alimentation (32) et des supports (58) de fileries de connexion sont fixés audit rail (40) par encliquetage de supports sur la face de fixation postérieure du rail pour libérer totalement la face antérieure pour la fixation de l'appareillage sans solution de continuité.

2. Coffret électrique selon la revendication 1, caractérisé en ce que ledit rail profilé (40) comporte deux ailes (44, 46) parallèles raccordées l'une à l'autre par une paroi (42, 98) commune perpendiculaire s'étendant parallèlement à la face avant du coffret, chaque extrémité des ailes (44, 46) étant repliée vers l'extérieur pour former un rebord perpendiculaire (48a, 48b) ayant une saillie externe (52), chacune desdites ailes (44, 46) portant de plus à proximité de la paroi commune (42, 98) une saillie (54; 94, 96) interne, les deux saillies internes se faisant face et confinant avec la paroi commune (42, 98) un logement susceptible de recevoir à engagement un écrou ou une pièce de fixation.

3. Coffret électrique selon la revendication 2, caractérisé en ce que la paroi commune (42) est fixée à une partie intermédiaire des ailes (44, 46) à proximité de l'extrémité postérieure, lesdites saillies internes (54) étant disposées dans le plan contenant les saillies externes (52) à l'extrémité postérieure des ailes (44, 46).

4. Coffret électrique selon la revendication 2, caractérisé en ce que la paroi commune (98) est fixée à l'extrémite postérieure des ailes (44, 46) dans le plan des saillies externes (52), lesdites saillies internes (94, 96) étant disposées dans un plan intermédiaire entre la face antérieure et la paroi commune (98) à proximité de cette dernière.

5. Coffret électrique selon l'une quelconque des revendications précédentes, caractérisé en ce que le bornier (32, 34, 36) multipolaire est formé par la superposition d'une pluralité de barres conductrices décalées verticalement, chaque barre associée à la phase correspondante, étant équipée d'une pluralité de bornes ou de connecteurs échelonnés à intervalles réguliers sur toute la longueur de la barre, le raccordement de l'appareillage (20) modulaire au bornier (32, 34, 36) s'effectuant à partir de la face avant du coffret au moyen de conducteurs de liaison (38) se raccordant aux bornes des barres conductrices et des appareillages (20) encliquetés sur le rail profilé (40).

6. Coffret électrique selon la revendication 5, comprenant plusieurs rangées (12, 14, 16) superposées d'appareillage modulaire (20), caractérisé en ce que le bornier (32, 34, 36) de chaque rangée (12, 14, 16) forme un jeu de barres élémentaire de dérivation raccordé électriquement à un jeu de barres orthogonal (24) principal de distribution s'étendant verticalement dans l'intervalle postérieur ménagé entre lesdites rangées horizontales et le fond du coffret.

7. Coffret électrique selon l'une quelconque des revendications précédentes, caractérisé en ce qu'il comporte des bracelets (58, 100) de support de la filerie ayant un anneau de logement des fils prolonge par une suspente à semelle (66, 102) d'encliquetage sur le rail profilé (40).

8. Coffret électrique selon la revendication 7, caractérisé en ce que ladite suspente présente deux semelles d'encliquetage (66, 102) disposées dos à dos pour un encliquetage respectivement sur la face antérieure et sur la face postérieure de fixation du rail profilé (40).

9. Coffret électrique selon la revendication 8, caractérisé en ce que ledit anneau du bracelet (100) présente un orifice (104) d'introduction des fils, délimité par deux bords (106, 108) et obturé par une languette élastique (116) et qu'un peigne (112) de retenue des fils sortant desdits bracelets est fixé à l'un (106) desdits bords pour s'étendre parallèlement et en-dessous du rail profilé (40).

10. Coffret électrique selon la revendication 7, 8 ou 9, caractérisé en ce qu'un cache (114) s'étendant entre le bracelet (100) et l'appareillage (20) est fixe sur l'un (108) desdits bords pour coiffer les fils sortant desdits bracelets (100).

## Patentansprueche

1. Elektrischer Niederspannungsverteilerkasten oder -tafel, der mit einem mehrpoligen Netz verbunden ist, und der Modulgeraete (20) enthaelt, welche auf mindestens einer Stuetzschiene (40) befestigt ist, die von einem mit dem Gestell oder Kastenboden verbundenen Metallprofil gebildet wird, wobei sich die genannte Schiene gemaess der Querrichtung des Kastens erstreckt und einerseits eine vordere Befestigungsseite aufweist gebenueber der Vorderseite des Kastens, zum Einrasten der Untersaetze der Modulgeraete (20) und andererseits eine hintere Befestigungsseite, dadurch gekennzeichnet, dass die Hilfsausruestungen der genannten Geraete, so wie die Versorgungsklemmenkaesten (32) und die Anschlussverdrahtungs Stuetzen (53), an der genannten Schiene (40) befestigt sind durch Einrastung der Stuetzen auf der hinteren Befestigungsseite der Schiene, um die vordere Seite vollstaendig zu befreien fuer die Defestigung der Geraete ohne Unterbrechung der Kontinuitaet.

2. Elektrischer Kasten gemaess Anspruch 1, dadurch gekennzeichnet, dass die genannte Profilschiene (40) zwei parallele Fluegel (44, 46) aufweist, die miteinander durch eine gemeinsame senkrechte Wand (42, 98) verbunden sind, die sich parallel zu der Vorderseite des Kastens erstreckt, wobei jedes Ende der Fluegel (44, 46) nach aussen gebogen ist, um einen senkrechten Rand (48a, 48b) zu bilden mit einem aeusseren Vorsprung (52), wobei jeder der genannten Fluegel (44, 46) ausserdem in der Naehe der gemeinsamen Wand (42, 98) einen inneren Vorsprung (54; 94, 96) aufweist welche inneren Vorspruenge sich gegenueberliegen und mit der gemeinsamen Wand (42, 98) eine Aushoehlung bilden, die eine Schraube oder ein Befestigungsteil aufnehmen kann.

3. Elektrischer Kasten gemaess Anspruch 2, dadurch gekennzeichnet, dass die gemeinsame Wand (42) an einem Zwischenteil der Fluegel (44, 46) in der Naehe des hinteren Endes befestigt ist, wobei die genannten inneren Vorspruenge (54) auf der Ebene angeordnet sind, die die aeusserenVorspruenge(52)am hinteren Ende der Fluegel (44, 46) enthalten.

4. Elektrischer Kasten gemaess Anspruch 2, dadurch gekennzeichnet, dass die gemeinsame Wand (98) am hinteren Ende der Fluegel (44, 46) auf der Ebene der aeusseren Vorspruenge (52) befestigt ist, wobei die genannten inneren Vorspruenge (94, 96) auf einer Zwischenebene zwischen der Vorderseite und der gemeinsamen Wand (98) in der Naehe der letzteren angeordnet sind.

5. Elektrischer Kasten gemaess irgendeinem der vorhergehenden Ansprueche, dadurch gekennzeichnet, dass der mehrpolige Klemmenkasten (32. 34, 36) durch Uebereinanderschichtung einer Mehrzahl von senkrecht versetzten Leitschienen gebildet wird, wobei jede der entsprechenden Phase zugeordnete Schiene mit einer Mehrzahl von Klemmen oder Steckverbindungen ausgeruestet ist, die in regelmaessigen Abstaenden auf der ganzen Laenge der Schieneverteiltsind, wobeiderAnschlussder Modulgeraete (20) an den Klemmenkasten (32, 34, 36) vonder Vorderseite des Kastens aus erfolgt mit Hilfe von Verbindungsleitern (38), die sich an den Klemmen der Leitschienen und der auf der Profilschiene (40) eingerasteten Geraete (20) anschliessen.

6. Elektrischer Kasten gemaess Anspruch 5, mit mehreren uebereinandergeschichteten Reihen (12, 14, 16) von Modulgeraeten (20), dadurch gekennzeichnet, dass der Klemmenkasten (32, 34, 36) jeder Reihe (12, 14, 16) eine elementare Nebenschluss-Sammelschiene bildet, die elektrisch mit einer orthogonalen Haupt-Verteiler-Sammelschiene (24) verbunden ist, die sich senkrecht in dem hinteren Zwischenraum erstreckt, der zwischen den genannten waagerechten Reihen und dem Kastenboden vorgesehen ist.

7. Elektrischer Kasten gemaess irgendeinem der vorhergehenden Ansprueche, dadurchgekennzeichnet, dasser Traegerbaender (58, 100) fuer die Verkabelung aufweist, mit einem Ring zur Unterbringung der Draehte, verlaengert durch eine Aufhaengung mit einer Sohle (66, 102) zur Einrastung auf der Profilschiene (40).

8. Elektrischer Kasten gemaess Anspruch 7, dadurch gekennzeichnet, dass die genannte Aufhaengung zwei Einrastungssohlen (66, 102) aufweist, die Rueckseite an Rueckseite angeordnet sind fuer eine Einrastung auf der vorderen beziehungsweise auf der hinteren Befestigungsseite der Profilschiene (40).

9. Elektrischer Kasten gemaess Anspruch 8, dadurch gekennzeichnet, dass der genannte Ring des Dandes (100) eine Oeffnung (104) zur Einfuehrung der Draehte aufweist, begrenzt von zwei Raendern (106, 108) und verschlossen durch eine elastische Zunge (116), und dass ein Kamm (112) zum Zurueckhalten der aus den genannten Daendern herauskommenden Draehte an einem (106) der genannten Raender befestigt ist, um sich parallel und unter der Profilschiene (40) zu erstrecken.

10. Elektrischer Kasten gemaess Anspruch 7, 8 oder 9, dadurch gekennzeichnet, dass eine Abdeckung (114), die sichzwischendem Dand (100) und den Geraeten (20) erstreckt, auf einem (108) der genannten Taender befestigt ist, um die aus den genannten Daendern (100) herauskommenden Draehte zu bedecken.

## Claims

1. Low-voltage electrical distribution casing or board connected with a multipole network and comprising modular switchgear (20) fastened on at least one support rail (40) constituted by a sectional iron connected with the frame or the bottom of the casing, said iron extending according to the transverse direction of the casing and presenting on the one hand a front fixing face arranged in face of the front side of the casing and arranged for the clipsing of the bases of the modular switchgear (20), and on the other hand a back fixing face, characterized in that the auxiliaries of said switchgear, like supply terminal blocks (32) and supports (58) for the wiring connection are fastened on said iron (40) by clipsing the supports on the back fixing face in order to free completely the front face for fastening the switchgear without interrupting of the continuity.

2. Electrical casing according to claim 1, characterizedin that said sectional iron (40) comprises two parallel wings (44, 46) connected together by a perpendicular common wall (42, 98) extending parallelly to the front face of the casing, each end of the wings (44, 46) being folded up to the outside in order to constitute a perpendicular flange (48a, 48b) with an external projection (52), each of said wings (44,46) bearing furthernear the common wall (42, 98)an internal projection (54; 94, 96), the two internal projections facing one another and delimiting with the common wall (42, 98) a housing to receive in engagement a screw or a fixing piece.

3. Electrical casing according to claim 2, characterized by the fact that the common wall (42) is fastened to an intermediate part of the wings (44, 46) near the back end, said internal projections (54) being arranged on the plane containing the external projections (52) at the back end of the wings (44, 46).

4. Electrical casing according to claim 2, characterized in that the common wall (98) is fastened to the back end of the wings(44, 46) on the plane of the external projections (52), said internal projections (94, 96) being arranged on an intermediate plane between the front face and the common wall (98) near this last mentioned.

5. Electrical casing according to anyone of the preceding claims, characterized by the fact that the multipole terminal block (32, 34, 36) is constituted by the superposition of a plurality of conductive busbars shifted vertically, each busbar associated with the corresponding phase being provided with a plurality of terminals or connectors, placed at regular intervals on the whole length of the busbar, the connection of the modular switchgear (20) with the terminal block (32, 34, 36) being realized from the front face of the casing by means of connection conductors (38) which connect with the terminals of the conductive busbars and of the switchgear fixed on the sectional iron (40).

6. Electrical casing according to claim 5, comprising several superposed rows (12, 14, 16) of modular switchgear (20), characterized in that the terminal block (32, 34, 36) of each row (12, 14, 16) constitutes an individual derivation busbar electrically connected to an orthogonal main distribution busbar (24) extending vertically in the back interval arranged between said horizontal rows and the bottom of the casing.

7. Electrical casing according to anyone of the preceding claims, characterized in that it comprises wiring support bands (58, 100) with a ring for lodging the wires extended by a hanger with a shoe (66, 102) for fixing on the sectional iron (40).

8. Electricalcasingaccording to claim 7, characterized in that said hanger comrrises two clipsing shoes (66, 102) arranged backside to backside for clipsing respectively on the front fixing face and on the back fixing face of the sectional iron (40).

9. Electrical casing according to claim 8, characterized in that said ring of the band (100) comprises an opening (104) for the introduction of the wires, delimited by two edges (106, 108) and covered by an elastic tongue (116), and in that a comb (112) for retaining the wires coming out of said bands is fastened to one (106) of said edges in order to extend parallelly and under the sectional iron (40).

10. Electrical casing according to claim 7, 8 or 9, characterized in that a cover (114) extending between the band (100) and the switchgear (20) is fastened to one (108) of said edges to cover the wires which are coming out of said bands (100).

Fig1

Fig 1b

Fig.2

Fig 4

Fig 1a

Fig 3

Fig 5

Fig. 19

Fig. 6

Fig. 20

Fig 7

Fig 8

Fig 9

Fig 10

Fig 11

Fig 12

0 109 881

Fig 13

Fig 14

Fig 15

Fig. 16

40

92

20

48a

90

92

90

Fig. 18

88

Fig. 17

88    20

40

90

92

20

40

88

92

90

0 109 881